# EUROPÄISCHE PATENTANMELDUNG

(11) **EP 1 674 193 A1**
(43) Veröffentlichungstag der Anmeldung: **28.06.2006**
(21) Anmeldenummer: 04030824.9
(22) Anmeldetag: 27.12.2004
(51) Int. Cl.: B23K 26/38, B23K 26/073

(54) **Verfahren zur Herstellung eines Lochs**

(71) Anmelder: SIEMENS AKTIENGESELLSCHAFT, 80333 München (DE)
(72) Erfinder: Beck, Thomas, 16341 Panketal (DE); Motzkus, Ralf, 13187 Berlin (DE); Oppert, Andreas, 13585 Berlin (DE)

(57) **Zusammenfassung**

Verfahren zur Herstellung eines Lochs (19) in einem Bauteil (1) mittels eines fokussierten Strahls (13) der in der Ebene der Oberfläche (22) des Bauteils (1) eine bestimmte Querschnittsflache, insbesondere einen bestimmten Durchmesser (d) aufweist, wobei die Querschnittsflache, insbesondere der Durchmesser (d) des Strahls (13), während der Herstellung des Lochs (19) verändert wird, und wobei der Fokus des Strahls (13) zumindest in den ersten Verfahrensschritten innerhalb des Bauteils (1) oder unterhalb einer zu durchbohrenden Wand liegt.

## Beschreibung

Die Erfindung betrifft ein Verfahren zur Herstellung eines Lochs gemäß dem Oberbegriff des Anspruchs 1.

Bei vielen Bauteilen, insbesondere bei Gussteilen müssen nachträglich durch Materialabtragungen Vertiefungen wie z.B. Durchgangslöcher erzeugt werden. Insbesondere bei Turbinenbauteilen, die zur Kühlung Filmkühllöcher aufweisen, werden nach der Herstellung des Bauteils Löcher nachträglich eingebracht.

Solche Gussteile oder Turbinenbauteile erhalten oft auch Schichten, wie z.B. eine metallische Zwischenschicht und/oder eine keramische äußere Schicht. Die Filmkühllöcher müssen dann durch die Schichten des Substrats (Gussteil) hindurch erzeugt werden. Jedoch können die Löcher auch vor dem Auftragen der Schichten erzeugt werden.

Die WO 86/02301 offenbart ein Laserbohrverfahren bei dem die Spitzenenergie, die Dauer und die Form variiert und kontrolliert werden.

Die DE 199 05 571 A offenbart ein Verfahren zur Erzeugung konischer Löcher mittels eines Laserstrahls, bei dem der Laserstrahl in einer Trommelbewegung gedreht wird.

Die EP 0 826 457 A1 offenbart ein Laserbohrverfahren, bei dem der Brennpunkt des Laserstrahls von der Oberfläche der äußeren Schicht weg nach außen bewegt wird, um ein Loch größeren Durchmessers zu erzielen.

Die EP 0 976 487 B1 offenbart die Herstellung eines Lochs mittels eines Lasers, bei dem eine Blende in einer Ebene hin und her geschoben wird, um ein bestimmtes Profil in dem Loch zu erzeugen.

Die DE 198 25 092 C2 offenbart ein Lasersystem zur Erzeugung eines fokussierten Laserstrahls, bei dem der Fokusdurchmesser variabel gehalten wird.

Die oben angegebenen Verfahren bzw. Vorrichtungen führen jedoch zur Schädigung an den inneren Oberflächen des Lochs.

Es ist daher Aufgabe der Erfindung dieses Problem zu überwinden.

Die Aufgabe wird gelöst durch ein Verfahren gemäß Anspruch 1.

In den Unteransprüchen sind weitere vorteilhafte Maßnahmen aufgelistet, die in vorteilhafter Art und Weise miteinander beliebig kombiniert werden können.

Es zeigen
- Figur 1: einen ersten Verfahrensschritt des erfindungsgemäßen Verfahrens,
- Figur 2: einen zweiten Verfahrensschritt des erfindungsgemäßen Verfahrens,
- Figur 3: ein Durchgangsloch,
- Figur 4: eine Turbinenschaufel,
- Figur 5: eine Brennkammer,
- Figur 6: eine Gasturbine.

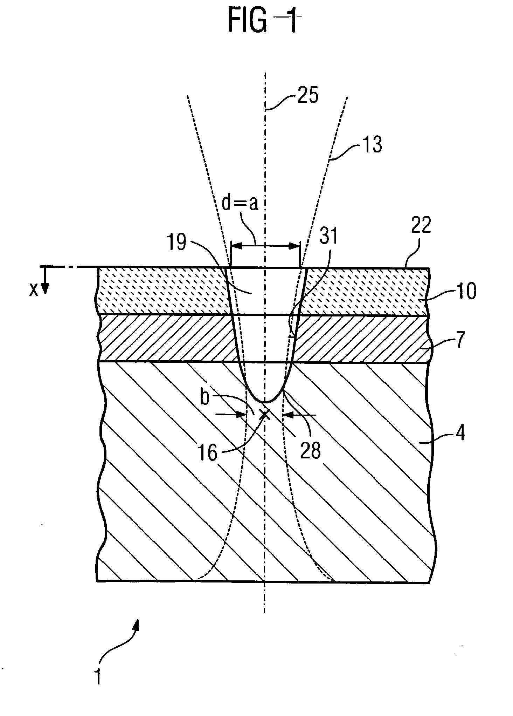

Figur 1 zeigt ein beispielhaftes Bauteil 1, das mit dem erfindungsgemäßen Verfahren behandelt werden kann.

Das Bauteil 1 kann ein Schichtsystem darstellen, sodass es beispielsweise aus einem metallischen oder keramischen Substrat 4 mit zumindest einer darauf aufliegenden Schicht 7, 10 (beispielsweise bis 400 *µ*m dick) besteht.

Das Bauteil 1 kann auch ein metallisches oder keramisches massives Bauteil (ohne Schichten) sein.

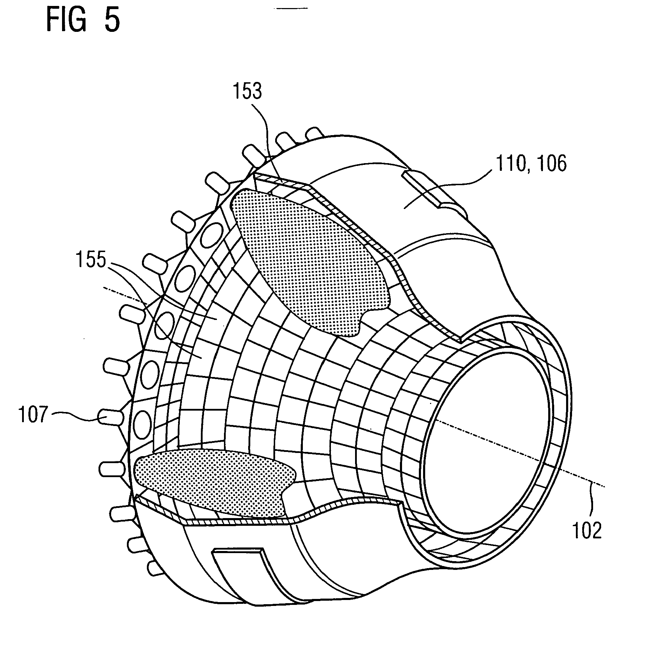

Das Bauteil 1 ist beispielsweise ein Bauteil für eine Turbine, insbesondere eine Gas- (100, Fig. 5) oder Dampfturbine. Bei Turbinenbauteilen besteht das Substrat 4 vorzugsweise aus einer nickel-, kobalt- oder eisenbasierten Superlegierung. Bei den Komponenten einer Turbine, die bei hohen Temperaturen eingesetzt werden, ist auf dem Substrat 4 eine beispielsweise metallische Korrosionsschutzschicht 7 bspw. des Typs MCrAlX aufgebracht, auf der beispielsweise zur Wärmedämmung eine keramische Schicht 10 angeordnet ist.

In diese Schichtsysteme 1 oder in die Substrate 4 ohne Schichten werden durch einen Strahl 13 zur Bearbeitung bei der Neuherstellung oder nach der Bearbeitung von eingesetzten Bauteilen (Refurbishment) Löcher 19 in das Bauteil 1 eingebracht. Der Strahl 13 kann beispielsweise ein Laserstrahl, ein Elektronenstrahl, ein Hochdruckwasserstrahl oder ein Plasmastrahl einer EDM-Maschine sein.

Im Folgenden wird nur exemplarisch auf den Laserstrahl eingegangen.
Dabei trifft beispielsweise ein Laserstrahl 13 zuerst auf die Oberfläche 22 des Bauteils 1 auf, wobei der Laserstrahl 13 bspw. zumindest in den ersten Verfahrensschritten in der Ebene der Oberfläche 22 einen Durchmesser d = a aufweist und einen Bereich abträgt, der eine Querschnittsfläche A des herzustellenden Lochs 19 aufweist.

Der Laserstrahl 13 weist eine beispielsweise symmetrische konkave (kegelförmige) Form auf. Der Fokus 16 des Laserstrahls 13 liegt hier am Anfang des Verfahrens im Bauteil 1, hier beispielsweise im Bereich des Substrats 4.

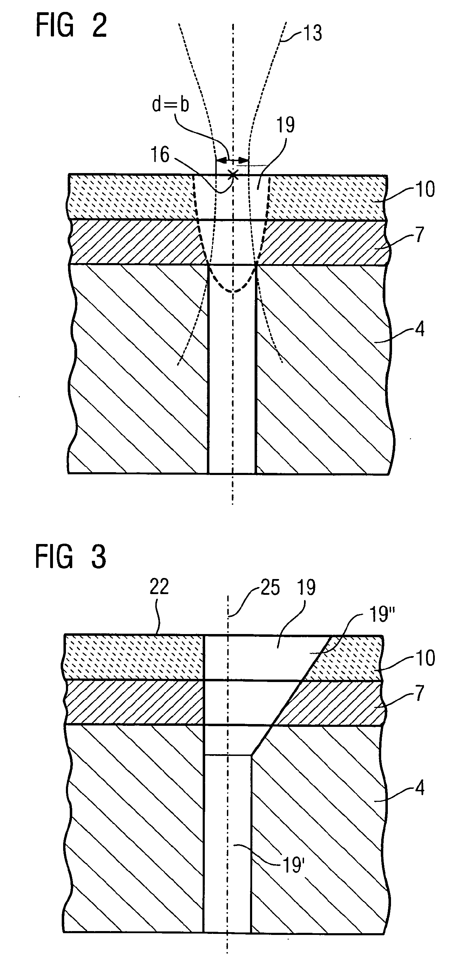

Die Durchgangsrichtung 25 verläuft durch das Loch 19 und ist insbesondere eine Symmetrielinie zumindest eines Teils 19' (Fig. 3) des Lochs 19.

Würde die Front des Materialabtrages beim Bohren eine gewisse Tiefe x erreichen, insbesondere in der Nähe der Lage des Fokus 16, so würde die erhöhte Energiedichte des Strahles 13 zu einer stärkeren Gefügebelastung und im schlimmsten Fall zu Rissbildungen führen. So würde die innere Oberfläche 31 des Durchgangslochs 19 bis zu dessen Fertigstellung weiterhin mit Laserstrahlung, also mit Energie beaufschlagt, die zu einem unerwünschten Energieeintrag führt und ggf. die Rissbildung fördert.

Erfindungsgemäß wird das Problem der erhöhten Energiedichte und des Energieeintrags in die innere Oberfläche 31 des Lochs 19 dadurch gelöst, dass die Querschnittsfläche oder der Durchmesser d des Strahls 13 beispielsweise auf der Höhe der Ebene der Oberfläche 22 von einer Anfangsgröße verringert wird.
Dies erfolgt dann, wenn eine bestimmte Tiefe x des Lochs 19 erzeugt wurde. Insbesondere, wenn die Schichten 7, 10 durchbohrt sind, wird die Querschnittsfläche oder der Durchmesser des Strahls 13 verringert.

Dies kann bspw. ohne Veränderung der Lage des Fokus 16 geschehen, nämlich durch eine Veränderung des Querschnitts oder Durchmessers d des Strahls 13 in der Ebene des Fokus' 16 (d < b(Fig. 1)), wodurch der Durchmesser des Strahls 13 auch entlang der Durchgangsrichtung 25 dünner wird, d.h. der gesamte Strahl 13 wird dünner und in seiner Form verändert. Ggf. wird die Leistung des Lasers und die Energie des Strahls 13 erhöht.

Ebenso ist es möglich, dass nur die Lage des Fokus' 16 des Laserstrahls 13, insbesondere entlang der Durchgangsrichtung 25, verschoben wird (Fig. 2), also bspw. bis zur Ebene der Oberfläche 22 des Bauteils 1 (also in Richtung des bereits erzeugten Lochs 19), wodurch ebenfalls ein geringerer Durchmesser d = b auf der Höhe der Ebene der Oberfläche 22 erreicht wird (Fig. 2), da der Strahl 13 konkav ausgebildet ist und entlang der Durchgangsrichtung 25 verschiedene Durchmesser aufweist. Der gesamte Strahl 13 behält hier seine Form bei und wird nur verschoben.

Die Durchmesserverringerung des Laserstrahls 13 in der Ebene der Oberfläche 22 oder Verschiebung des Fokus 16 kann von Anfang an kontinuierlich oder diskontinuierlich erfolgen sowie kann die Durchmesserverringerung des Laserstrahls 13 in der Ebene der Oberfläche 22 oder Verschiebung des Fokus 16 erst in einem späteren Verfahrensschritt erfolgen, d.h. wenn ein bestimmter Anteil des Lochs 19 erzeugt wurde.

Beispielsweise soll das Loch 19 zum Teil die Form eines asymmetrischen Diffusors 19" aufweisen, der sich über die Schichten 7, 10 und in das Substrat erstreckt. Danach folgt beispielsweise ein symmetrischer Lochanteil 19' (Fig. 3). Auch solche Löcher 19 können mit dem erfindungsgemäßen Verfahren hergestellt werden.

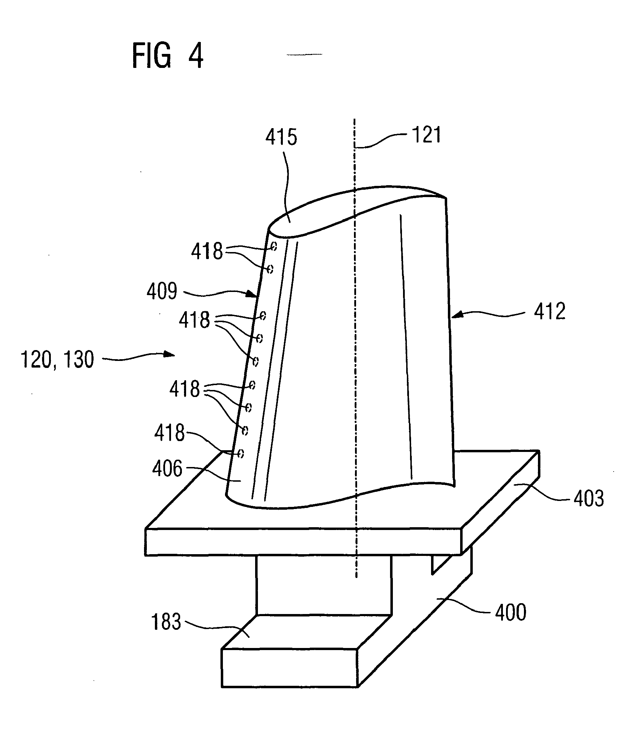

Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418, 19 (gestrichelt angedeutet) auf, die mit dem erfindungsgemäßen Verfahren hergestellt werden können.

Die Figur 5 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein.
Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

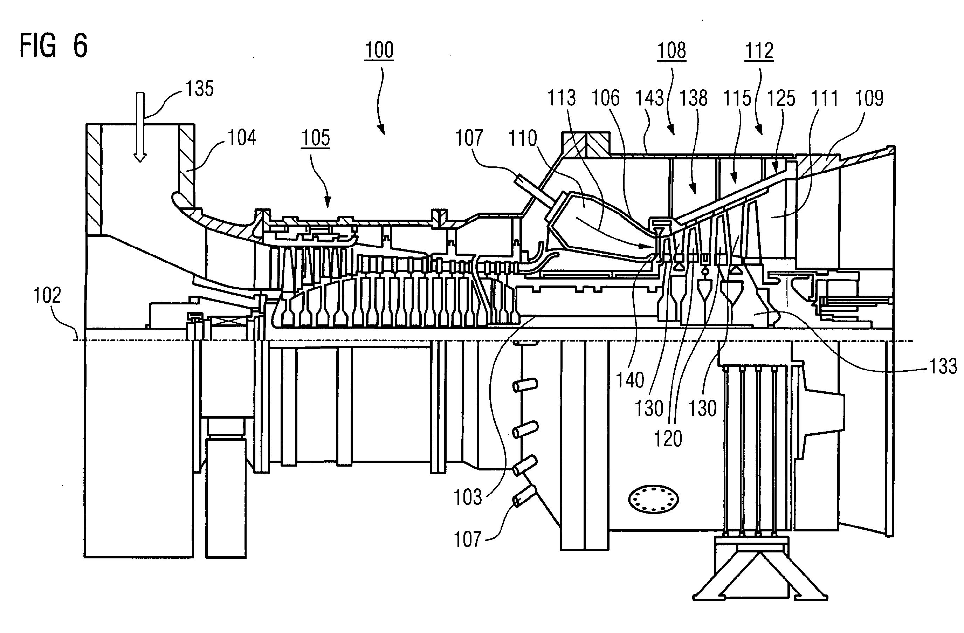

Die Figur 6 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verfahren zur Herstellung eines Lochs (19) in einem Bauteil (1, 120, 130, 155) mittels eines fokussierten Strahls (13),
der in der Ebene der Oberfläche (22) des Bauteils (1, 120, 130, 155) eine bestimmte Querschnittsfläche (A), insbesondere einen bestimmten Durchmesser (d) aufweist, wobei die Querschnittsfläche (A),
insbesondere der Durchmesser (d) des Strahls (13), während der Herstellung des Lochs (19) verändert wird,
**dadurch gekennzeichnet, dass**
der Fokus des Strahls (13) zumindest in den ersten Verfahrensschritten innerhalb des Bauteils (1) oder unterhalb einer zu durchbohrenden Wand liegt.

2. Verfahren nach Anspruch 1,
**dadurch gekennzeichnet, dass**
die Veränderung der Querschnittsfläche oder des Durchmessers (d) des Strahls (13) in der Ebene der Oberfläche (22) eingestellt wird.

3. Verfahren nach Anspruch 1 oder 2,
**dadurch gekennzeichnet, dass**
die Querschnittsfläche oder der Durchmesser (d) des Strahls (13) verringert wird.

4. Verfahren nach Anspruch 1,
**dadurch gekennzeichnet, dass**
der Fokus (16) des Strahls (13) während der Herstellung des Lochs (19) aus der Tiefe (x) des Bauteils (1, 120, 130, 155) heraus verschoben wird,
insbesondere bis in die Ebene der Oberfläche (22).

5. Verfahren nach Anspruch 1 oder 2,
**dadurch gekennzeichnet, dass**
die Querschnittsfläche oder der Durchmesser (d) des Strahls (13) dann verringert wird,
wenn das herzustellende Loch (19) in den Schichten (7, 10),
die die Oberfläche (22) bilden,
erzeugt worden ist.

6. Verfahren nach Anspruch 1, 2 oder 3,
**dadurch gekennzeichnet, dass**
die Querschnittsfläche oder der Durchmesser (d) des Strahls (13) diskontinuierlich verändert wird.

7. Verfahren nach Anspruch 1, 2 oder 3,
**dadurch gekennzeichnet, dass**
die Querschnittsfläche oder der Durchmesser (d) des Strahls (13) kontinuierlich verändert wird.

8. Verfahren nach einem oder mehreren der Ansprüche 1 - 7,
**dadurch gekennzeichnet, dass**
als Strahl (13) ein Laserstrahl verwendet wird.

9. Verfahren nach einem oder mehreren der Ansprüche 1 - 7,
**dadurch gekennzeichnet, dass**
als Strahl (13) ein Elektronenstrahl verwendet wird.

10. Verfahren nach Anspruch 4,
**dadurch gekennzeichnet, dass**
der Fokus (16) entlang einer Durchgangsrichtung (25), die durch das herzustellende Loch (19) verläuft und die insbesondere eine Symmetrielinie zumindest eines Teils (19') des Lochs (19) darstellt,
verschoben wird.

11. Verfahren nach Anspruch 1, 8 oder 9,
**dadurch gekennzeichnet, dass**
der Strahl (13) eine konkave Form aufweist.

12. Verfahren nach Anspruch 2, 3, 5, 6 oder 7,
**dadurch gekennzeichnet, dass**
am Anfang die Querschnittsfläche des abgetragenen Bereichs in der Ebene der Oberfläche (22) der Querschnittsfläche des herzustellenden Lochs (19) entspricht.

13. Verfahren nach Anspruch 1,
**dadurch gekennzeichnet, dass**
das herzustellende Loch (19) entlang einer Durchgangsrichtung (25) eine konstante Querschnittsfläche oder einen konstanten Durchmesser aufweist.

14. Verfahren nach Anspruch 1,
**dadurch gekennzeichnet, dass**
mit dem Verfahren ein Durchgangsloch (19),
insbesondere ein Filmkühlloch erzeugt wird.

15. Verfahren nach Anspruch 1 oder 14,
**dadurch gekennzeichnet, dass**
mit dem Verfahren ein neu hergestelltes oder wieder aufzuarbeitendes Bauteil einer Dampfturbine oder Gasturbine (100), insbesondere eine Turbinenschaufel (120, 130) oder ein Brennkammerelement (155) bearbeitet wird.
